# EUROPEAN PATENT SPECIFICATION

(11) **EP 4 306 815 B1**
(45) Date of publication and mention of the grant of the patent: **17.09.2025**
(21) Application number: 23183197.5
(22) Date of filing: 04.07.2023
(51) Int. Cl.: F16C 33/78, F16C 33/76, F16C 23/08, F16C 35/063

(54) **BEARING UNIT WITH ROLLING BODIES**
LAGEREINHEIT MIT WÄLZKÖRPERN
UNITÉ DE PALIER AVEC CORPS DE ROULEMENT

(30) Priority: 15.07.2022 IT 202200014851
(43) Date of publication of application: 17.01.2024
(73) Proprietor: Aktiebolaget SKF, 415 50 Göteborg (SE)
(72) Inventor: Baracca, Fausto, 54100 Massa (IT); Bertolini, Andrea A, 54033 Carrara (IT); Cavacece, Fabio, 00199 Roma (IT)
(74) Representative: Kohl, Thomas

(56) References cited:
- EP-A1- 2 990 674
- JP-A- 2002 349 591
- JP-B2- 3 991 190
- US-A- 4 526 485
- US-A1- 2009 180 721

## Description

### Technical field

The present invention relates to a bearing unit with rolling bodies, having an optimized anchorage for the sealing device. Such a bearing unit is suitable in particular for use in the food and beverage (F&B) industry.

### Prior art

Bearing units having rolling elements or bodies which, as is known, are used to allow relative movement between one component or group and another component or group, are known. The bearing unit generally has a first component, for example a radially outer ring, which is secured to a rotary element, and a second component, for example a radially inner ring, which is secured to a stationary element. As is known, the radially inner ring is often rotary whereas the radially outer ring is stationary, although in other applications, such as that described, the outer ring rotates (in the marble industry, rotation speeds are typically around 750 rpm) while the inner ring is stationary. In any case, in roller bearing units, the rotation of one ring with respect to the other is made possible by a plurality of rolling elements positioned between the cylindrical surface of one component and the cylindrical surface of the second component, usually referred to as raceways. The rolling elements may be balls, cylindrical or conical rollers, needle rollers and similar rolling elements.

It is also known practice for bearing units to have suitable sealing devices to protect against external contaminants and to create a seal with respect to lubricant. Typically, the sealing devices are made up of a shaped shield mounted by interference in suitable seats in the rings of the bearing unit, for example the radially outer ring. The shaped shield has an elastomer coating with one or more sealing lips and a protrusion which, in use, is inserted by interference, therefore deformably, in the seat of the radially outer ring. The sealing lips may, in use, make frictional contact with other components of the bearing unit, for example with the radially inner ring, which is rotatable. The sealing lips may also be in a "guttering" arrangement, in other words axially external and substantially parallel to one another, so as to create a "labyrinth" seal, for example, with the casing containing the bearing unit. Such sealing devices must be very efficient both from a functional point of view and in terms of reliability, throughout the entire life of the bearing unit. A bearing unit according to the preamble of claim 1 is known from EP2990674 A1.

One of the main drawbacks of known solutions is the procedure for assembling the sealing device. To be specific, when the sealing device is inserted in the seat in the radially outer ring, the elastomer protrusion is highly compressed and, not having the space necessary to adapt properly to the seat, gives rise to high tension forces that risk causing the sealing device to come out of the seat in the outer ring.

There is therefore a need to define a bearing unit with a sealing system that does not have the abovementioned drawbacks.

### Brief description of the invention

It is an aim of the present invention to produce a bearing unit with rolling bodies which does not have the above drawbacks.

The present invention provides a bearing unit with rolling bodies having the features set out in the attached claims.

### Brief description of the drawings

The invention will now be described with reference to the attached drawings, which show some non-limiting embodiments of the bearing unit, in which:
- Figure 1 shows, in cross section, a bearing unit with rolling bodies according to a preferred embodiment of the present invention,
- Figure 2 shows, on an enlarged scale and in section, a detail of Figure 1 in a first operating configuration,
- Figure 3 shows, on an enlarged scale and in section, the detail of Figure 2 in a second operating configuration,
- Figure 4 shows, on an enlarged scale and in section, a part of Figure 1, incorporating the detail of Figures 2 and 3, and
- Figures 5, 6 and 7 show, on an enlarged scale, a detail of Figure 4.

### Detailed description

With reference now to the above figures, an embodiment of a bearing unit with rolling bodies according to the present invention is described below purely by way of example.

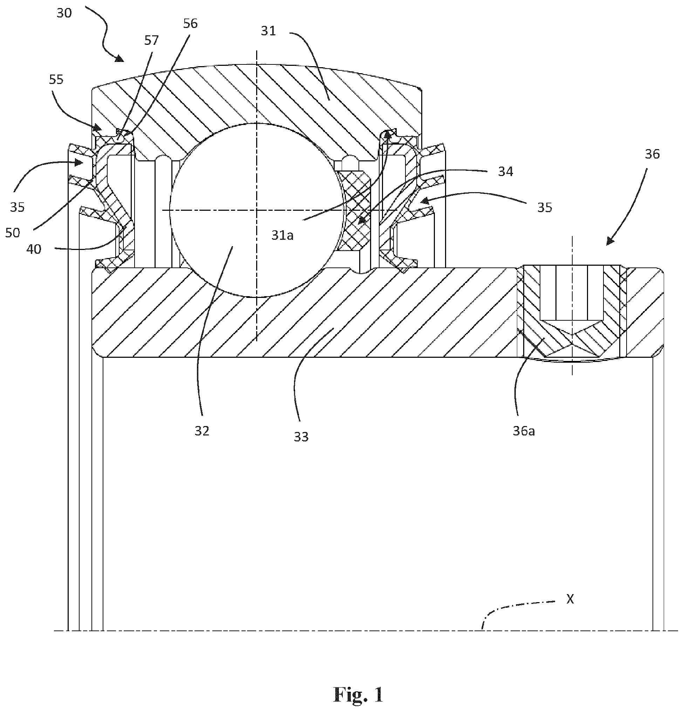

With reference in particular to Figure 1, the bearing unit 30 for use in the food and beverage industry comprises:
- a radially outer ring 31, preferably stationary,
- a radially inner ring 33, preferably rotatable about a central axis of rotation X of the bearing unit 30,
- a row of rolling elements 32, in this case balls, interposed between the radially outer ring 31 and the radially inner ring 33,

- a cage 34 for holding the rolling elements, for keeping the rolling elements of the row of rolling elements 32 in position,
- a securing device 36 for securing the bearing unit 30, in particular the radially inner ring 33, to a machine shaft, for example taking the form of a pair of grub screws 36a.

Throughout the present description and in the claims, terms and expressions indicating positions and orientations, such as "radial" and "axial", are to be understood with reference to the central axis of rotation X of the bearing unit 30.

To simplify the drawings, the reference sign 32 will designate both individual balls and the row of balls. Again for the sake of simplicity, the term "ball" may be used by way of example in the present description and in the attached drawings instead of the more generic term "rolling element" (with the same numerical references also being used). Some embodiments and the related drawings may use rolling elements other than balls (for example rollers).

The bearing unit 30 also has sealing devices 35 for sealing off the bearing unit from the external environment. Below, the sealing devices 35 may also be referred to more simply as seals 35, this obviously being understood to be the same component.

The sealing device 35 is interposed between the radially inner ring 33 and the radially outer ring 31. The sealing device 35 cooperates with a radially internal cylindrical surface 31b of the radially outer ring 31 and is stably anchored, in use, in a seat 31a of the radially outer ring 31. The seat 31a is radially internal with respect to the radially outer ring 31 and axially external with respect to the cylindrical surface 31b. Moreover, the seat 31a has a toroidal shape and is recessed in the radially external direction with respect to the cylindrical surface 31b.

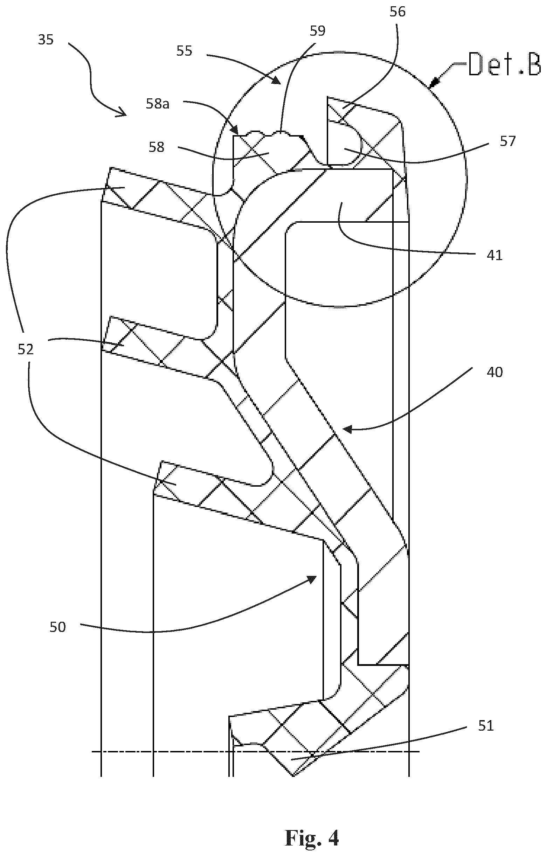

With reference also to Figure 4, the sealing device 35 comprises a shaped shield 40 in metallic material and an elastomer coating 50 overmolded on the shaped shield 40.

In particular, the shaped shield 40 comprises a radially outer cylindrical portion 41 coaxial with the axis X and a flange portion 41b which is rigidly secured to the cylindrical portion 41 and extends radially inwards and transversely to the axis X from said cylindrical portion 41.

The elastomer coating 50 comprises:
- a contacting lip 51, radially internal, which in use creates a seal by frictional contact with the radially inner ring 33,
- a plurality of non-contacting lips 52, in a "guttering" arrangement, in other words axially external and substantially parallel to one another so as to create "labyrinth" seals with a casing (known and therefore not shown in the figures) containing the bearing unit 30, and
- an anchorage 55, radially external and rigidly secured to the cylindrical portion 41 of the shaped shield 40, making it possible to stably attach the sealing device 35 to the seat 31a in the radially outer ring 31.

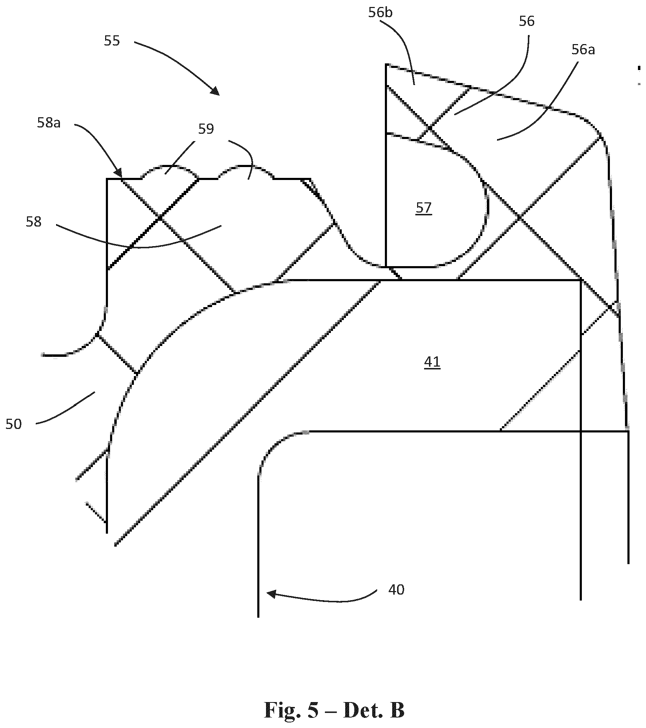

With reference also to Figure 5, the anchorage 55, according to one aspect of the present invention, comprises:
- an anchoring lip 56, radially external, which in use is fitted stably in the seat 31a of the radially outer ring 31,
- an annular cavity 57, radially internal with respect to the anchoring lip 56,
- a cylindrical portion 58, axially external, of the elastomer coating 50 which is also axially external with respect to the annular cavity 57 and, after assembly, axially external with respect to the seat 31a in the radially outer ring 31,
- a radially external cylindrical surface 58a of the cylindrical portion 58, which cooperates in use with the corresponding cylindrical surface 31b and which advantageously presents protrusions 59, radially external.

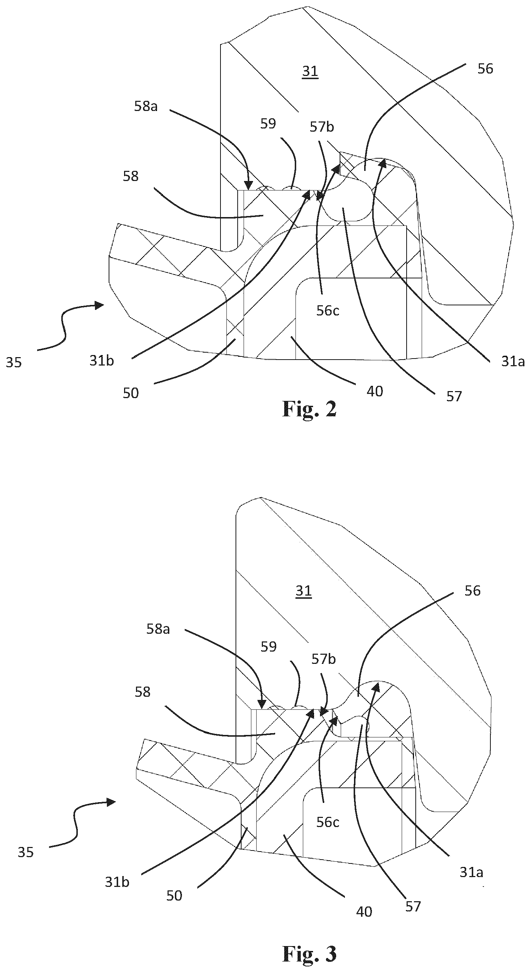

Figures 2 and 3 show the anchorage 55 respectively in a non-deformed configuration, before assembly, in which the anchoring lip 56 protrudes radially and axially outwards, and in a deformed configuration, after assembly, in which - by virtue of the shape of the anchoring lip 56 and the presence of the annular cavity 57 in a radially internal position with respect to the anchoring lip 56 - the anchoring lip 56, subjected to the reaction forces exchanged with the seat 31a, is able to bend freely, partially occupying the annular cavity 57.

This is due to the fact that the anchoring lip 56 has a root portion 56a which is thick and strong and a distal portion 56b that is more flexible and thinner than the root portion 56a. Moreover, the dimension 56ax of the axial projection of the anchoring lip 56 is smaller than the axial dimension 57ax of the annular cavity 57. Lastly, the anchoring lip 56 has an edge 56c, axially external, which in use is arranged parallel to an inclined back, or to a surface 57b which axially delimits the annular cavity 57 externally.

Thus, the anchoring lip 56 is not subjected to high tension forces which could cause it to come out of the corresponding seat 31a.

Advantageously, the presence of the protrusions 59 on the cylindrical surface 58a gives rise, after assembly, to interference between the cylindrical surface 58a of the cylindrical portion 58 of the elastomer coating 50 and the corresponding surface 31b of the radially outer ring 31, improving the stability of the sealing device 35 by preventing rotation of the sealing device 35 with respect to the radially outer ring 31.

It will be understood that, in order to ensure the highest efficiency of this new anchorage 55, it is advantageous to combine this new solution with optimized dimensions.

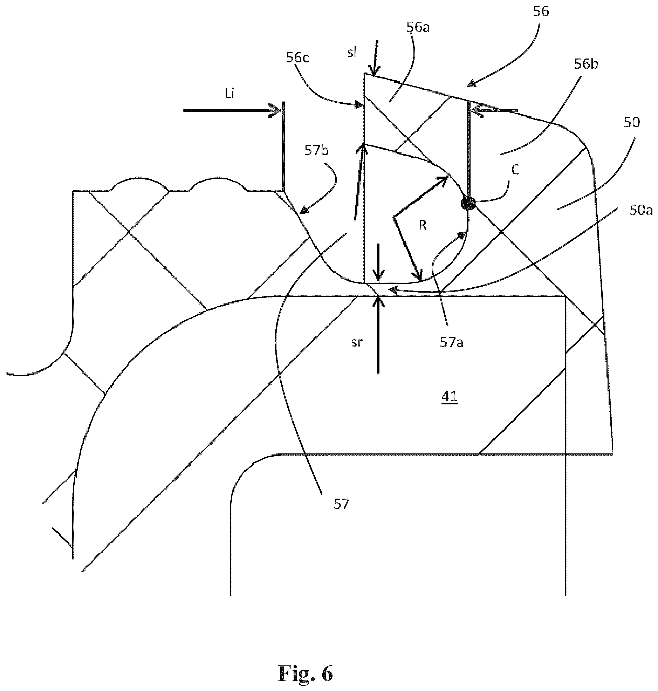

With reference to Figure 6, first, it will be intuitively understood that the anchoring lip 56, after assembly, must be able to bend freely inside the annular cavity 57. More specifically, it must be ensured that the edge 56c, axially external, of the anchoring lip 56 does not interfere (again, after assembly) with other portions of the anchorage 55 or, in any case, of the elastomer coating 50. In particular, it is necessary to avoid interference with the cylindrical portion 50a of the anchorage 55 which is radially internal to the annular cavity 57. Therefore, the thickness sr of the cylindrical portion 50a must be between 0.15 mm and 0.20 mm; lower values would compromise the overmolding of the elastomer, while higher values would give rise to interference, in use, between the edge 56c of the anchoring lip 56 and said cylindrical portion 50a of the elastomer coating 50.

For the same reason (ensuring that the anchoring lip 56 can bend freely inside the annular cavity 57), the radius R of the axially internal surface 57a of the annular cavity 57 must have the same dimension as the thickness sl of the anchoring lip 56. Both of these dimensions - the radius R of the surface 57a and the thickness sl of the anchoring lip 56 - will preferably be between 0.75 mm and 1.25 mm.

Moreover, again to ensure that the anchoring lip 56 can bend freely, and to take account of the axial length of the cylindrical portion 58 (as will be seen below), the maximum axial width Li of the annular cavity 57 will also be obtained accordingly.

Lastly, the volume of the annular cavity 57 must be at least 25% greater than the volume of the anchoring lip 56. The volume of the anchoring lip 56 is calculated from the centre of rotation C of said anchoring lip 56 in the axially external direction. Centre of rotation C means the theoretical point about which the anchoring lip 56 bends.

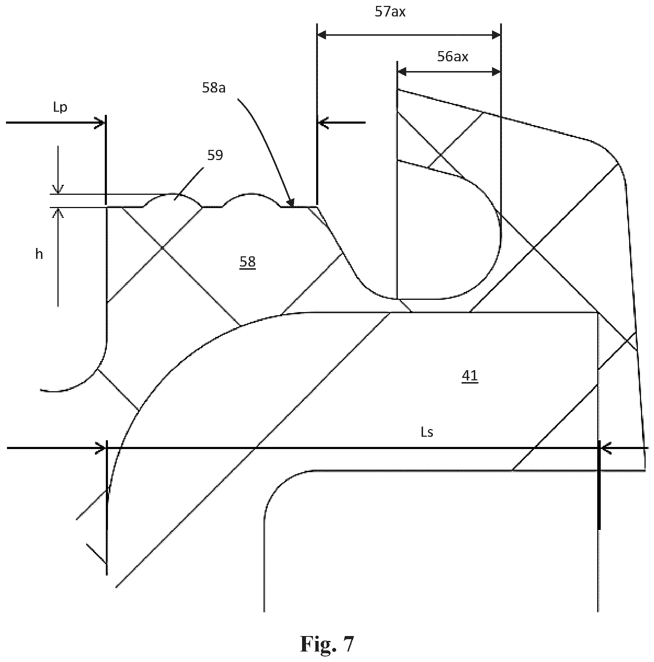

With reference to Figure 7, preferably, the protrusions 59 are at least two in number and the height h of the protrusions 59, in other words the interference created, after assembly, between the corresponding surfaces 58a and 31a, may be between 0.15 mm and 0.30 mm, in such a way as to ensure good stability of the sealing device 35, preventing the elastomer coating 50 from rotating with respect to the bearing unit 30. Such interference ensures that it does not rotate in spite of the friction caused by the shaped shield 40. There may be more than two protrusions 59, as long as the distance between consecutive protrusions is at least equal to the height h of each protrusion.

The axial length Lp of the cylindrical portion 58, axially external, of the elastomer coating 50 may preferably be around half the axial length Ls of the cylindrical portion 41 of the shaped shield 40. This ensures that the elastomer adheres to the cylindrical portion 41 sufficiently to withstand the friction caused by the shaped shield 40. This axial length Lp is sufficient to ensure that the shaped shield 40 ends up in a vertical position, thus preventing the "umbrella" effect that can occur when assembling the shaped shield 40.

To sum up, the solution proposed by the sealing device with an optimized anchorage offers the following advantages:
- improves automatic assembly of the sealing device in the bearing unit, preventing it from coming out during application;
- generally improves the process for assembling the sealing device, preventing it from rotating relative to the radially outer ring.

In addition to the embodiments of the invention as described above, it is to be understood that there are numerous other variants. It is also to be understood that said embodiments are solely exemplary and do not limit the scope of the invention, its applications, or its possible configurations. On the contrary, although the above description enables those skilled in the art to apply the present invention in at least one exemplary configuration, it is to be understood that numerous variations are within the scope of the invention as defined in the appended claims.

## Claims

1. Bearing unit (30) comprising:
- a radially outer ring (31), stationary,
- a radially inner ring (33), rotatable with respect to an axis of rotation (X),
- a row of rolling bodies (32) interposed between the radially outer ring (31) and the radially inner ring (33),
- a sealing device (35), which is interposed between the radially inner ring (33) and the radially outer ring (31), is stably anchored, in use, in a seat (31a) of the radially outer ring (31) and comprises, in turn, a shaped shield (40) in metallic material, and an elastomer coating (50) overmolded on the shaped shield (40) and provided with an anchorage (55), which
comprises:
- an anchoring lip (56), radially external, that is configured, in use, to fit stably in the seat (31a) of the radially outer ring (31), and has a root portion (56a) and a distal portion (56b) that is more flexible and thinner than the root portion (56a), and
- an annular cavity (57), that is radially internal with respect to the anchoring lip (56), and that has an axial dimension (57ax) greater than the dimension (56ax) of the axial projection of the anchoring lip (56); the bearing unit (30) being **characterized by** the fact that the anchorage (55) comprises
- a cylindrical portion (58), axially external,
- a radially external cylindrical surface (58a) of the cylindrical portion (58), which cooperates in use with a corresponding radially internal cylindrical surface (31b) of the radially outer ring (31) and which presents protrusions (59), radially external, configured to generate, in use, an interference between the cylindrical surface (58a) and the corresponding cylindrical surface (31b) of the radially outer ring (31).

2. Bearing unit (30) according to claim 1, wherein a cylindrical portion (50a) of the anchorage (55), radially internal with respect to the annular cavity (57), has a thickness (sr) comprised between 0.15 mm and 0.20 mm.

3. Bearing unit (30) according to any of the preceding claims, wherein the radius (R) of an axially internal surface (57a) of the annular cavity (57) is equal to the thickness (sl) of the anchoring lip (56).

4. Bearing unit (30) according to claim 3, wherein the radius (R) of the surface (57a) and the thickness (sl) of the anchoring lip (56) are between 0.75 mm and 1.25 mm.

5. Bearing unit (30) according to any of the preceding claims, in which the volume of the annular cavity (57) is at least 25% greater than the volume of the anchoring lip (56).

6. Bearing unit (30) according to any of claims 2 to 5, wherein the protrusions (59) are at least two in number.

7. Bearing unit (30) according to any of claims 2 to 6, in which the height (h) of the protrusions (59) is between 0.15 mm and 0.30 mm.

8. Bearing unit (30) according to claim 7, in which the distance between two consecutive protrusions (59) is at least equal to the height (h) of each of such protrusions.

9. Bearing unit (30) according to one of claims 2 to 8, wherein the axial length (Lp) of the cylindrical portion (58) is equal to half the axial length (Ls) of a cylindrical portion (41) of the shaped shield (40).

## Patentansprüche

1. Lagereinheit (30), umfassend:
- einen radial äußeren Ring (31), feststehend,
- einen radial inneren Ring (33), drehbar um eine Rotationsachse (X),
- eine Reihe von Wälzkörpern (32), die zwischen dem radial äußeren Ring (31) und dem radial inneren Ring (33) angeordnet sind,
- eine Dichtungsvorrichtung (35), die zwischen dem radial inneren Ring (33) und dem radial äußeren Ring (31) angeordnet ist, im Gebrauch fest in einem Sitz (31a) des radial äußeren Rings (31) verankert ist und wiederum einen geformten Schild (40) aus metallischem Material sowie eine auf dem geformten Schild (40) umspritzte Elastomerbeschichtung (50) umfasst, die mit einer Verankerung (55) versehen ist, die
umfasst:
- eine radial äußere Verankerungslippe (56), die im Gebrauch dazu ausgelegt ist, fest in den Sitz (31a) des radial äußeren Rings (31) zu passen, und einen Wurzelabschnitt (56a) sowie einen außenliegenden Abschnitt (56b) aufweist, der flexibler und dünner als der Wurzelabschnitt (56a) ist, und
- einen ringförmigen Hohlraum (57), der radial innerhalb der Verankerungslippe (56) angeordnet ist und eine axiale Abmessung (57ax) aufweist, die größer als die Abmessung (56ax) der axialen Projektion der Verankerungslippe (56) ist;
wobei die Lagereinheit (30) **dadurch gekennzeichnet ist, dass** die Verankerung (55) umfasst:
- einen zylindrischen Abschnitt (58), axial außenliegend,
- eine radial äußere zylindrische Oberfläche (58a) des zylindrischen Abschnitts (58), die im Gebrauch mit einer entsprechenden radial inneren zylindrischen Oberfläche (31b) des radial äußeren Rings (31) zusammenwirkt und radial äußere Vorsprünge (59) aufweist, die dazu ausgelegt sind, im Gebrauch eine Presspassung zwischen der zylindrischen Oberfläche (58a) und der entsprechenden zylindrischen Oberfläche (31b) des radial äußeren Rings (31) zu erzeugen.

2. Lagereinheit (30) nach Anspruch 1, wobei ein zylindrischer Abschnitt (50a) der Verankerung (55), radial innen in Bezug auf den ringförmigen Hohlraum (57), eine Dicke (sr) aufweist, die zwischen 0,15 mm und 0,20 mm beträgt.

3. Lagereinheit (30) nach einem der vorhergehenden Ansprüche, wobei der Radius (R) einer axial inneren Oberfläche (57a) des ringförmigen Hohlraums (57) gleich der Dicke (sl) der Verankerungslippe (56) ist.

4. Lagereinheit (30) nach Anspruch 3, wobei der Radius (R) der Oberfläche (57a) und die Dicke (sl) der Verankerungslippe (56) zwischen 0,75 mm und 1,25 mm liegen.

5. Lagereinheit (30) nach einem der vorhergehenden Ansprüche, wobei das Volumen des ringförmigen Hohlraums (57) mindestens 25 % größer als das Volumen der Verankerungslippe (56) ist.

6. Lagereinheit (30) nach einem der Ansprüche 2 bis 5, wobei die Vorsprünge (59) mindestens zwei in der Anzahl sind.

7. Lagereinheit (30) nach einem der Ansprüche 2 bis 6, wobei die Höhe (h) der Vorsprünge (59) zwischen 0,15 mm und 0,30 mm beträgt.

8. Lagereinheit (30) nach Anspruch 7, wobei der Abstand zwischen zwei aufeinanderfolgenden Vorsprüngen (59) mindestens gleich der Höhe (h) jedes dieser Vorsprünge ist.

9. Lagereinheit (30) nach einem der Ansprüche 2 bis 8, wobei die axiale Länge (Lp) des zylindrischen Abschnitts (58) gleich der halben axialen Länge (Ls) eines zylindrischen Abschnitts (41) des geformten Schilds (40) ist.

## Revendications

1. Unité de palier (30) comprenant :
- une bague radialement extérieure (31), fixe,
- une bague radialement intérieure (33), rotative par rapport à un axe de rotation (X),
- une rangée de corps roulants (32) interposée entre la bague radialement extérieure (31) et la bague radialement intérieure (33),
- un dispositif d'étanchéité (35), qui est interposé entre la bague radialement intérieure (33) et la bague radialement extérieure (31), est assujetti de manière stable, durant l'utilisation, dans un siège (31a) de la bague radialement extérieure (31) et comprend, pour sa part, un flasque profilé (40) en matériau métallique, et un revêtement élastomère (50) surmoulé sur le flasque profilé (40) et muni d'une partie d'assujettissement (55), qui
comprend :
- une lèvre d'assujettissement (56), radialement extérieure, qui est configurée pour s'adapter de manière stable, lors de l'utilisation, dans le siège (31a) de la bague radialement extérieure (31), et présente une partie base (56a) et une partie distale (56b) qui est plus souple et plus mince que la partie base (56a), et
- une cavité annulaire (57) qui est radialement intérieure par rapport à la lèvre d'assujettissement (56) et présente une dimension axiale (57ax) supérieure à la dimension (56ax) de la saillie axiale de la lèvre d'assujettissement (56) ;
l'unité de palier (30) étant **caractérisée par le fait que** la partie d'assujettissement (55) comprend
- une partie cylindrique (58) axialement extérieure,
- une surface cylindrique radialement extérieure (58a) de la partie cylindrique (58), qui coopère durant l'utilisation avec une surface cylindrique radialement intérieure (31b) correspondante de la bague radialement extérieure (31) et qui présente des protubérances (59) radialement extérieures configurées pour générer, durant l'utilisation, un ajustement serré entre la surface cylindrique (58a) et la surface cylindrique (31b) correspondante de la bague radialement extérieure (31).

2. Unité de palier (30) selon la revendication 1, dans laquelle une partie cylindrique (50a) de la partie d'assujettissement (55), radialement intérieure par rapport à la cavité annulaire (57), a une épaisseur (sr) comprise entre 0,15 mm et 0,20 mm.

3. Unité de palier (30) selon l'une quelconque des revendications précédentes, dans laquelle le rayon (R) d'une surface axialement intérieure (57a) de la cavité annulaire (57) est égal à l'épaisseur (sl) de la lèvre d'assujettissement (56).

4. Unité de palier (30) selon la revendication 3, dans laquelle le rayon (R) de la surface (57a) et l'épaisseur (sl) de la lèvre d'assujettissement (56) sont compris entre 0,75 mm et 1,25 mm.

5. Unité de palier (30) selon l'une quelconque des revendications précédentes, dans laquelle le volume de la cavité annulaire (57) est au moins 25 % supérieur au volume de la lèvre d'assujettissement (56).

6. Unité de palier (30) selon l'une quelconque des revendications 2 à 5, dans laquelle les protubérances (59) sont au moins au nombre de deux.

7. Unité de palier (30) selon l'une quelconque des revendications 2 à 6, dans laquelle la hauteur (h) des protubérances (59) est comprise entre 0,15 mm et 0,30 mm.

8. Unité de palier (30) selon la revendication 7, dans laquelle la distance entre deux protubérances (59) consécutives est au moins égale à la hauteur (h) de chacune de ces protubérances.

9. Unité de palier (30) selon l'une des revendications 2 à 8, dans laquelle la longueur axiale (Lp) de la partie cylindrique (58) est égale à la moitié de la longueur axiale (Ls) d'une partie cylindrique (41) du flasque profilé (40).
